(19) Europäisches Patentamt
European Patent Office
Office européen des brevets

(11) **EP 2 084 395 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(51) Int Cl.:
*F03B 11/00* (2006.01)     *F16J 15/44* (2006.01)
*F16J 15/34* (2006.01)

(21) Anmeldenummer: **07815157.8**

(22) Anmeldetag: **22.10.2007**

(86) Internationale Anmeldenummer:
**PCT/AT2007/000490**

(87) Internationale Veröffentlichungsnummer:
**WO 2008/052231 (08.05.2008 Gazette 2008/19)**

(54) **ANORDNUNG ZUR ABDICHTUNG ZWISCHEN ZWEI RELATIV ZUEINANDER BEWEGBAREN TEILEN EINER HYDRAULISCHEN STRÖMUNGSMASCHINE**

ARRANGEMENT FOR SEALING TWO PARTS OF HYDRAULIC TURBOMACHINERY WHICH CAN MOVE RELATIVE TO ONE ANOTHER

ENSEMBLE DE JOINT D'ÉTANCHÉITÉ ENTRE DEUX PARTIES MOBILES L'UNE PAR RAPPORT À L'AUTRE D'UNE TURBOMACHINE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.11.2006 AT 18372006**

(43) Veröffentlichungstag der Anmeldung:
**05.08.2009 Patentblatt 2009/32**

(73) Patentinhaber: **GITTLER, Philipp**
**1130 Wien (AT)**

(72) Erfinder: **GITTLER, Philipp**
**1130 Wien (AT)**

(74) Vertreter: **Weiss, Christian**
**Pinter, Laminger & Weiss OG**
**Patentanwälte**
**Prinz-Eugen-Strasse 70**
**1040 Wien (AT)**

(56) Entgegenhaltungen:
**EP-A- 0 961 059      WO-A-02/23038**
**WO-A-2004/018870   US-A- 4 118 040**
**US-A- 5 052 694      US-A- 5 558 341**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die gegenständliche Erfindung betrifft eine Anordnung zur Abdichtung zwischen zwei relativ zueinander bewegten Teilen einer hydraulischen Strömungsmaschine, vorzugsweise zwischen einem Gehäuse und einem Laufrad einer hydraulischen Strömungsmaschine, mit einem Dichtelement, das hinsichtlich der beiden Teile auf einem ersten und einem zweiten hydraulischen Lager schwimmend gelagert angeordnet ist, wobei das erste und das zweite hydraulische Lager aus zumindest zwei zugeordneten Lagerflächen bestehen und das Dichtelement durch die auf seine Lagerflächen wirkenden hydraulischen Druckkräfte gelagert ist und wobei im Dichtelement eine hydraulische Verbindung, vorzugsweise eine Verbindungsbohrung, vorgesehen ist, die das erste hydraulische Lager mit dem zweiten hydraulischen Lager hydraulisch verbindet und mit einer Versorgungsleitung, die in das erste hydraulische Lager mündet.

Aufgrund der sehr ungünstigen Betriebszustände im Bereich der Außendurchmesser eines Laufrades einer hydraulischen Maschine, und hier vor allem bei größeren Maschinen mit Laufraddurchmessern von bis zu einigen Metern, war es bisher nicht möglich, eine zuverlässige Abdichtung zwischen Laufrad und Gehäuse zu bauen, was neben einer Wirkungsgradeinbuße durch Spaltverluste auch zu weiteren beträchtlichen Problemen führen kann. Dies liegt vor allem daran, dass im Bereich der Außendurchmesser des Laufrades, sehr hohe Umfangsgeschwindigkeiten auftreten, das Laufrad, sowie das Gehäuse starken Schwingungen unterworfen sind und aufgrund der hohen wirkenden Drücke das Laufrad zusätzliche axiale Verschiebungen erfährt. Diese Betriebszustände haben es bisher verhindert, eine nahezu, oder idealer Weise vollständig, dichte Abdichtung zu bauen.

Bisher angewandte Dichtungen, wie z.B. Labyrinthdichtungen, sind keine Dichtungen im eigentlichen Sinn, sondern lediglich Vorrichtungen zur Reduzierung des Spaltwasserstromes, wobei es aber auf jeden Fall zu einem unerwünschten Spaltwasserstrom kommt. Andere, wie z.B. bekannte Eisringdichtungen nach der EP 1 098 088 A, waren wiederum sehr aufwendig und in einem möglichen Betrieb unzuverlässig, da störungsanfällig.

Die US 5 052 694 A zeigt einen Dichtkörper, der auf einem hydrostatischen Lager in einer Richtung gelagert ist. In einer zweiten Richtung wird dieser Dichtkörper mittels Dichtelementen zwangsgeführt. In der Zuführleitung zum hydrostatischen Lager ist eine Drosseleinrichtung vorgesehen, mit der Schwankungen in den Spaltbreiten des hydrostatischen Lagers gedämpft werden. Auch in der AT 298 365 B wird eine Abdichtung mit einem Dichtkörper offenbart, der in einer Richtung auf einem hydraulischen Lager gelagert ist, in der anderen Richtung durch einen Kolben und eine Leitung aber wiederum zwangsgeführt ist. Die notwendige Anpresskraft des Dichtkörpers wird dabei durch den hydraulischen Kolben bewirkt. Der Versorgungsdruck des hydraulischen Lagers und des Kolbens wird dabei durch separate, von einander unabhängige Drosseln in der jeweiligen Zufuhrleitung eingestellt.

Ebenso sind aus dem Stand der Technik Dichtungen zwischen zwei relativ zueinander bewegten Teilen mittels eines hydrostatischen Lagers bekannt. Ein Dichtelement wird dabei in einer Richtung zwischen den beiden relativ zueinander bewegten Teilen auf einem hydrostatischen Lager gelagert. In einer zweiten Richtung wird das Dichtelement auf einem hydraulischen Lager gelagert. Das hydraulische Lager besteht dabei jeweils aus zwei Dichtkörpern, wie z.B. O-Ringe, zwischen denen ein Druckmedium zugeführt wird. Beispiele solcher Abdichtungen sind der US 4 118 040 A oder der GB 839 880 zu entnehmen.

Im axialen Rad-Seitenraum einer Turbine, also zwischen Nabe und Gehäuse, würde sich durch den Spaltwasserstrom und der Abdichtung zwischen Welle und Rad-Seitenraum (z.B. mittels Stopfbüchsendichtungen) ein mitunter sehr hoher Druck ausbilden, der im Wesentlichen dem Oberwasserdruck entspricht, und der versuchen würde das Laufrad in axialer Richtung zu verschieben, wodurch es zu großen axialen Belastungen der Lagerung des Laufrades und relativ großen axialen Verschiebungen des Laufrades kommen würde, was durch eine Druckreduktion mit Hilfe einer bekannte Spaltwasserleitung in das Unterwasser vermieden wird. In beiden entstehenden Rad-Seitenräumen, also zwischen Gehäuse und Ring bzw. Nabe, entsteht ein Spaltwasserstrom wodurch ein gewisser Anteil des Mediums nicht durch das Laufrad fließt und es somit zu einer Wirkungsgradeinbuße und zu einem Leistungsverlust kommt. In beiden Rad-Seitenräumen entsteht weiters eine sehr schnell rotierende Wasserscheibe, die aufgrund der entstehenden Reibung der Rotation der Welle entgegen wirkt und somit eine bremsende Wirkung entfaltet, was wiederum den Wirkungsgrad weiter reduziert. Aus diesen Gründen ist es erwünschenswert, eine nahezu vollständig dichte Abdichtung zwischen Laufrad und Gehäuse vorzusehen, die den Spaltwasserstrom unterbindet.

Dazu wurde in der WO 02/23038 A1 und der WO 2004/018870 A1 vorgeschlagen im peripheren Bereich des Laufrades einen fliegenden Dichtring vorzusehen, der auf zwei hydrostatischen Lagern gegenüber dem Gehäuse und dem Laufrad frei schwimmend angeordnet ist und somit durch das an den hydrostatischen Lagern austretende Sperrwasser ein Eindringen von Spaltwasser in den Rad-Seitenraum verhindert, womit die oben genannten Probleme behoben werden können. Der Dichtring weist dabei jeweils zumindest eine Verbindungsbohrung auf, die die beiden hydrostatischen Lager hydraulisch miteinander verbindet. Das Sperrwasser wird nun über zumindest eine Versorgungsleitung einem Lager zugeführt und gelangt über die Verbindungsbohrung(en) in das zweite Lager. Dabei war es immer erwünscht, dass das Sperrwasser möglichst verlustfrei von einem Lager zum anderen gelangt, um die für das Aufschwimmen des Dichtrings erforderlichen Drücke bzw. Druckverteilungen in den Lagern sicherstellen zu können. Dazu wurden die Verbindungsbohrungen immer möglichst groß ausgeführt und/oder viele über den Umfang verteilte Verbindungsbohrungen vorgesehen, um die unvermeidbaren natürlichen Strömungsverluste, die wie bekannt im Wesentlichen von der Geometrie der und der Strömungsgeschwindigkeit durch die Verbindungsbohrungen abhängen, so gering wie möglich zu halten.

Der Nachteil der in diesen beiden Anmeldungen offenbarten Anordnungen von Dichtringen in der Turbine liegt zum einen darin, dass der Dichtring in der Praxis unbefriedigende Funktionstauglichkeit besitzt, insbesondere bei einem Dichtring gemäß der Fig. 3 der WO 02/23038 A1. Liegt der Dichtring nämlich radial fest am Gehäuse an, so kann der Dichtring in radialer Richtung schwer zum Abheben gebracht werden, da das gesamte Sperrwasser das man über die Versorgungsleitung hineindrückt nämlich über die Verbindungsbohrung zum zweiten Lager geleitet wird und führt dort zu einem starken Abheben in axialer Richtung. Der Dichtring würde also am Gehäuse schleifen, was zur Beschädigung führt und in Folge zur Zerstörung führen kann. Hingegen im Fall, dass der Ring mit einem gewissen radialen Spiel eingebaut ist, würde er sich im Betrieb zwar zentrieren und sich radial und axial erheben, aber er würde aufgrund der fehlenden Kräftebalance keine bevorzugte Position einnehmen, er wäre instabil und er wäre radial ebenso wenig regulierbar. Versucht man nämlich die radiale Position durch Verändern des Volumenstromes zu verändern, würde sich lediglich die axiale Position verändern, da ein veränderter Volumenstrom wiederum über die Verbindungsbohrung direkt an das axiale Lager weitergeleitet werden würde. Ein solcher Dichtring wäre in der Praxis also wenig praktikabel. Andererseits wird bei den anderen Varianten des Dichtringes Sperrwasser mit einem Druck benötigt, der deutlich größer als der Oberwasserdruck selbst ist, um den Dichtring abzuheben und in einem stabilen Zustand zu halten. Im Betrieb des Dichtringes wird folglich ein Zusatzaggregat entsprechender Leistung zur Erhöhung des Druckes des Sperrwassers, wie z.B. eine Sperrwasserpumpe, benötigt, was natürlich den Aufwand erhöht und den Wirkungsgradgewinn durch den Dichtring zum Teil wieder zunichte macht.

Die Aufgabe der vorliegenden Erfindung besteht nun darin, die mit den bekannten Dichtringanordnungen nach wie vor vorhandenen Nachteile zu beheben, insbesondere eine kompakte Anordnung anzugeben, mit der auf Zusatzaggregate zu Erhöhung des Sperrwasserdruckes verzichtet werden kann bzw. wesentlich kleinere Zusatzaggregate benötigt werden und trotzdem ein stabiler Betrieb des Dichtringes ermöglicht wird.

Diese Aufgabe wird erfindungsgemäß dadurch gelöst, dass zwischen dem ersten hydraulischen Lager und dem zweiten hydraulischen Lager in der hydraulischen Verbindung eine Drosseleinrichtung vorgesehen ist, mit der ein Druckverlust, bezogen auf die am Dichtelement anliegende abzudichtende Druckdifferenz, von zumindest 1%, bevorzugt zumindest 5%, vorzugsweise zumindest 10%, zwischen erstem hydraulischen Lager und zweitem hydraulischen Lager vorgebbar ist. Durch eine solche "interne" Drosselung zwischen erstem und zweitem hydraulischen Lager kann eine kleine kompakte Bauweise erzielt werden. Weiters ergibt sich durch den niedrigeren Einspeisedruck eine breitere Einspeisenut, was vorteilhaft den axialen Bewegungsspielraum des Dichtelementes vergrößert. Insbesondere kann aber die erfindungsgemäße Anordnung mit einem stark reduzierten Einspeisedruck des Sperrwassers betrieben werden, was dazu führt, dass im Idealfall kein Zusatzaggregat zur Erhöhung des Druckes erforderlich ist. Das Sperrwasser kann z.B. direkt dem Oberwasser entnommen werden und über Druckregeleinrichtungen auf den gewünschten Sperrwasserdruck eingestellt werden. Damit ergibt sich ein deutlich geringerer Energieverlust als bei den bekannten gattungsgleichen Dichtringen des Standes der Technik. Darüber hinaus ermöglicht die erfindungsgemäße Anordnung auch einen stabilen Betrieb des Dichtelementes, da es durch die interne Drosselung zwischen den beiden hydraulischen Lagern möglich wird, auch das radiale Lager zu kontrollieren. Bevorzugt werden die hydraulischen Lager als hydrostatische Lager ausgeführt.

Besonders einfach wird die Drosseleinrichtung als hydraulische Verbindung, Rohreinsatz in der hydraulischen Verbindung, als Blende oder Lochplatte oder als plötzliche Aufweitung des Querschnittes der hydraulischen Verbindung ausgeführt. Mit einer solchen Drosseleinrichtung kann der an der Drosseleinrichtung entstehende Druckverlust genau bestimmt und eingestellt werden, womit das Verhalten des Dichtelementes vorbestimmbar wird.

Bevorzugt wird das Dichtelement mittels einer Verdrehsicherung gegenüber einem der beiden Teile der hydraulischen Strömungsmaschine verdrehgesichert angeordnet, wobei die Verdrehsicherung auf das Dichtelement vorteilhaft im Wesentlichen nur eine Umfangskraft ausübt.

Insbesondere bei Dichtringen mit großem Durchmesser ist es vorteilhaft, diesen in zumindest zwei Teile geteilt auszuführen, was die Herstellung und den Transport des Dichtringes vereinfacht.

Dabei kann es für einen selbsttätigen Umfangslängenausgleich vorgesehen sein, dass der Dichtring an einer Anzahl von Teilungsstellen geschlitzt ausgeführt ist und an den restlichen Teilungsstellen die Teile des Dichtringes starr miteinander verbunden sind, wobei an der geschlitzten Teilungsstelle in Umfangsrichtung ein Spalt vorgesehen wird. Um zu verhindern, dass Sperrwasser durch den entstehenden Spalt in axialer und/oder radialer Richtung durch das Dichtelement durchströmt, kann ein Mittel zum Verhindern einer Durchströmung vorgesehen sein. Um eine Verformung des geschlitzten Dichtringes zu verhindern kann an der geschlitzten Teilungsstelle ein Mittel zum Verhindern einer Verformung des Dichtringes vorgesehen werden, das die Beweglichkeit des Dichtringes in Umfangsrichtung nicht behindert. Ebenso kann es für eine gleichmäßige Kraftverteilung über den Umfang des Dichtringes vorteilhaft sein, zumindest eine an eine Teilungsstelle angrenzende Lagerausnehmung mit einer zumindest teilweise vergrößerten Fläche auszuführen.

Wenn das Dichtelement im Betrieb im Kräftegleichgewicht gehalten wird und momentenfrei ist, kann das Dichtelement verwindungsweich gebaut werden, was sowohl die Abmessungen als auch das Gewicht eines solchen Dichtelementes vorteilhaft reduziert.

Die gegenständliche Erfindung wird im Folgenden durch die beispielhaften, nicht einschränkenden, spezielle Ausführungsvarianten zeigenden Fig. 1 bis 5 beschrieben. Dabei zeigt

Fig. 1 einen Querschnitt einer typischen Francisturbine,
Fig. 2 eine Detailansicht des Dichtbereiches zwischen Laufrad und Gehäuse mit einem erfindungsgemäßen Dichtelement,
Fig. 3 eine perspektivische Darstellung eines erfindungsgemäßen Dichtelementes,
Fig. 4 ein weiteres Detail eines erfindungsgemäßen Dichtelementes und
Fig. 5 eine weitere vorteilhafte Ausführung des Dichtelementes.

Vorab der eigentlichen Beschreibung der Erfindung werden im Folgenden einige Begriffe definiert und näher erklärt:

Eine Lagerausnehmung oder Lagerfläche kann eine ring- bzw. zylinderförmige Form haben, kann beliebige Breiten und Tiefen bzw. Höhen aufweisen und kann in Umfangsrichtung durchgängig oder aber auch an einer oder mehreren Stellen abschnittsweise unterbrochen sein. Eine Lagerausnehmung kann natürlich jede beliebige Querschnittsform, z.B. auch eine dreiecksförmige Rille, aufweisen und muss nicht unbedingt als rechteckige Nut ausgeführt sein, wie im konkret beschriebenen Ausführungsbeispiel. Ein hydraulisches Lager, wie z.B. ein hydrostatisches Lager, besteht immer aus einander zugewandten Lagerflächen. In zumindest eine der Lagerflächen eines hydraulischen Lagers mündet eine Zuführung für Lagermedium, wie z.B. Sperrwasser. Bevorzugt ist in zumindest einer der Lagerflächen zumindest eine Lagerausnehmung, wie z.B. eine Nut, Rille oder ähnliches, angeordnet. Ein hydraulisches Lager kann aber auch zwei oder mehr Lagerausnehmungen aufweisen. Wenn über den Umfang nun mehrere Lagerausnehmungen angeordnet sind, weil eine Lagerausnehmung z.B. wie oben beschrieben abschnittsweise unterbrochen ist, wird in der folgenden Beschreibung der Einfachheit halber trotzdem immer nur von einem hydraulischen Lager und einer Lagerausnehmung gesprochen.

Unter hydraulischer Verbindung, wie z.B. eine Verbindungsbohrung, wird im Sinne dieser Anmeldung zumindest ein Hohlraum mit zumindest zwei offenen Enden bezeichnet, wobei dieser Hohlraum auf beliebigem Weg von einem Ende zum anderen Ende von einem Medium durchströmbar ist.

Wenn von einer Versorgungsleitung die Rede ist, so ist zu beachten, dass in Umfangsrichtung eine Anzahl von solchen gleichartigen oder ähnlichen Versorgungsleitungen, also eine Reihe von Versorgungsleitungen, angeordnet sein können. Das Gleiche gilt natürlich auch für eine hydraulische Verbindung. Um die Beschreibung nicht zu kompliziert werden zu lassen, wird jedoch meistens nur von einer Versorgungsleitung oder einer hydraulischen Verbindung gesprochen, wobei damit gegebenenfalls natürlich auch eine Reihe von über den Umfang verteilten Versorgungsleitungen oder hydraulischen Verbindungen umfasst ist.

Der Einfachheit halber wird die erfindungsgemäße Abdichtung nur anhand einer Turbine, im speziellen Fall einer Francis-Turbine, beschrieben, wobei diese Abdichtung jedoch selbstverständlich auch bei allen anderen hydraulischen Strömungsmaschinen mit relativ zueinander bewegbaren Teilen, wie ein Laufrad, welches in einem Maschinengehäuse läuft, wie etwa bei Pumpen oder Pumpturbinen, äquivalent anwendbar ist.

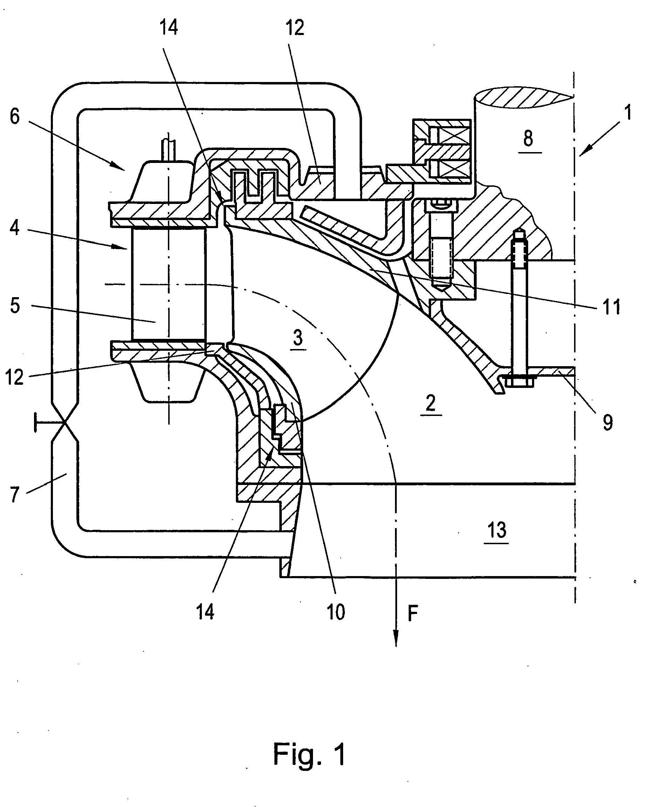

Die Fig. 1 zeigt nun eine Turbine 1, hier eine Francisturbine, mit einem Laufrad 2, welches in einem Turbinengehäuse 12 läuft. Das Laufrad 2 weist eine Anzahl von Turbinenschaufeln 3 auf, die durch Ring 10 und die Nabe 11 begrenzt werden. Das Laufrad 2 ist mittels eines Nabendeckels 9 und eventuell mittels weiterer Befestigungsmitteln, wie z.B. Bolzen oder Schrauben, an einem Ende der Welle 8 bezüglich der Welle 8 verdrehfest befestigt. Die Welle 8 ist mittels nicht dargestellter Wellenlager drehbar gelagert und treibt in bekannter Weise beispielsweise einen ebenfalls nicht dargestellten Generator zur Erzeugung von elektrischer Energie an, der bevorzugt am anderen Ende der Welle 8 angeordnet ist.

Der Zufluss des flüssigen Mediums, meistens Wasser, von einem Oberwasser, wie z.B. ein höher liegendes Wasserreservoir, erfolgt in den meisten Fällen über ein hier nicht dargestelltes, hinlänglich bekanntes Spiralgehäuse. Zwischen Spiralgehäuse und Laufrad 2 ist ein Leitapparat 4, bestehend aus einer Anzahl von Leitschaufeln 5, die in diesem Beispiel mittels eines Verstellapparates 6 verdrehbar sind. Die verstellbaren Leitschaufeln 5 dienen zur Regulierung der Leistung der Turbine 1 durch Verändern sowohl des Volumenstromes durch die Turbinen 1, als auch des Laufrad-Eintrittsdralles. Zusätzlich könnten zwischen Spiralgehäuse und Leitschaufeln 5 auch noch in bekannter Weise Stützschaufeln angeordnet sein.

Der Abfluss des Wassers erfolgt, wie in Fig. 1 gezeigt, über ein unmittelbar an die Turbine 1 anschließendes Saugrohr 13, das in ein nicht dargestelltes Unterwasser mündet. Daraus ergibt sich ein durch den Pfeil gekennzeichneter Hauptwasserstrom F vom Spiralgehäuse über den Leitapparat 4 und dem Laufrad 2 zum Saugrohr 13.

Neben dem Hauptwasserstrom F entsteht bei herkömmlichen Dichtungen 14, wie z.B. eine in Fig. 1 dargestellte Labyrinthdichtung, in bekannter Weise auch noch ein Spaltwasserstrom durch die Rad-Seitenräume zwischen Turbinengehäuse 12 und Ring 10 bzw. Nabe 11. Durch diese Spaltwasserströme entstehen Verluste, einerseits dadurch dass die Energie einer gewissen Wassermenge nicht im Laufrad 2 abgearbeitet werden kann und andererseits dadurch, dass in den mit Wasser gefüllten Rad-Seitenräumen durch das rotierende Laufrad 2 doch beträchtliche Reibungskräfte hervorgerufen werden können, die das Laufrad 2 bremsen. Das Spaltwasser des radialen Rad-Seitenraumes (also zwischen Turbinengehäuse 12 und Nabe 11) wird oftmals z.B. mittels einer Spaltwasserleitung 7 über eine Drossel abgeführt und in das Saugrohr 13 geleitet. Zusätzlich werden oftmals, wie in Fig. 1 angedeutet, Entlastungsbohrungen in der Nabe 11 vorgesehen, über die der radiale Rad-Seitenraum mit dem Hauptwasserstrom F verbunden wird. Diese Maßnahmen können aber natürlich das Auftreten eines Spaltwasserstromes nicht verhindern. Durch die erfindungsgemäße Abdichtung, wie weiter unten beschrieben, werden nun diese Spaltwasserströme unterbunden, sodass das gesamte zuströmende Wasser durch das Laufrad 2 fließt und dessen Strömungsenergie, im Wesentlichen ohne Spaltverluste, vollständig ausgenutzt werden kann. Darüber hinaus wird die Reibung in den Rad-Seitenräumen reduziert bzw. sogar minimiert, da sich mit einer solchen Abdichtung in den Rad-Seitenräumen keine rotierende Wasserscheiben mehr ausbilden, sondern diese Räume, mit Ausnahme des Lagerwassers, von Luft ausgefüllt werden. Weiters wird dadurch auch der auf die Welle 8 und auf die Wellenlagerung wirkende Axialschub stark verringert ohne den Verluststrom über eine Spaltwasserleitung 7 abführen zu müssen.

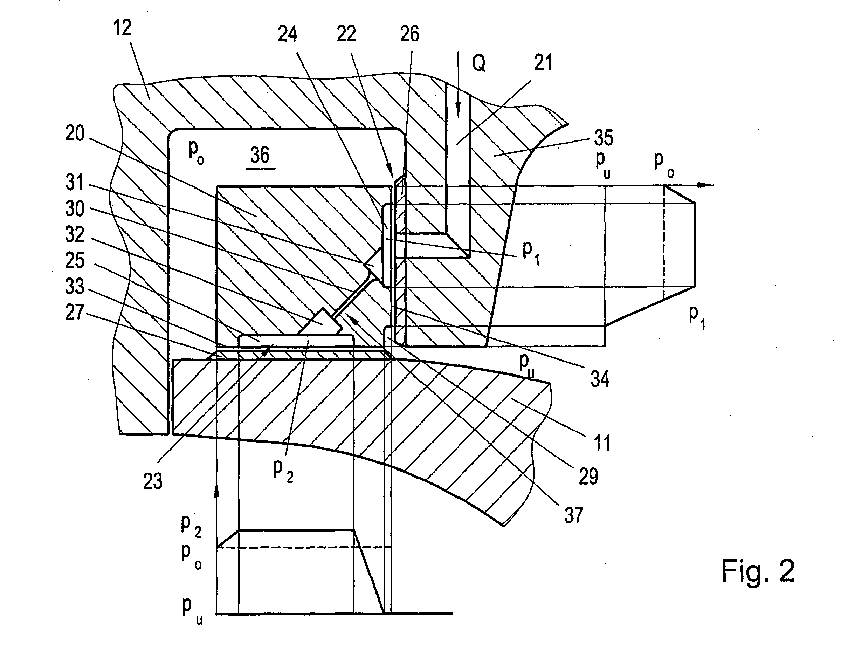

In der Fig. 2 ist nun eine Detailansicht einer beispielhaften erfinderischen Abdichtung eines peripheren Teils eines Laufrades 2 einer Turbine 1 zwischen Turbinengehäuse 12 und Nabe 11 mittels eines als Dichtring 20 ausgeführten Dichtelements, das auf zwei hydraulischen Lagern, in diesem Fall zwei hydrostatischen Lagern 22, 23, schwimmend gelagert angeordnet ist, gezeigt. Schwimmend gelagert bedeutet dabei, dass das Dichtelement im Wesentlichen in allen Richtungen frei beweglich ist und den Bewegungen des Dichtelementes keine anderen Kräfte, wie z.B. Haltekräfte, Reibungskräfte, Kräfte hervorgerufen durch weitere Dichtkörper zwischen Dichtelement und Teilen der Turbine 1 oder Kräfte weiterer entgegen wirkender hydraulischer Lager, in der gleichen Größenordnung wie die auf das Dichtelement wirkenden hydraulischen Druckkräfte entgegen wirken. Dazu weist das Turbinengehäuse 12 eine Schulter 35 auf, an der eine radiale Lagerfläche 26 angeordnet ist. Gleichfalls ist am Laufrad 2 an der Nabe 11 eine axiale Lagerfläche 27 angeordnet. Diese Lagerflächen 26, 27 können separate Bauteile sein, die nachträglich an der erforderlichen Stelle aufgebracht werden, z.B. durch Schweißen, Schrauben, Kleben, etc., oder können natürlich auch direkt im entsprechenden Bauteil, z.B. der Nabe 11, eingearbeitet werden, z.B. ein plangeschliffener und mit einer verschleißfesten Beschichtung beschichteter Abschnitt an der Nabe 11 oder der Schulter 35. Der radialen Lagerfläche 26 am Turbinengehäuse 12 bzw. der axialen Lagerfläche 27 an der Nabe 11 ist jeweils eine radiale 34 bzw. axialen Lagerfläche 33 am Dichtring 20 zugeordnet. Die beiden zugehörigen Lagerflächen 26, 34 und 27, 33 bilden jeweils einen Teil eines radialen und axialen hydrostatischen Lagers 22, 23.

Die Orientierungen "axial" bzw. "radial" beziehen sich dabei immer auf die Wirkrichtungen der hydraulischen Lager bezogen auf die Drehachse des Laufrades 2 der Turbine 1 und werden hauptsächlich zur einfacheren Unterscheidbarkeit der beiden hydraulischen Lager, wie die beiden hydrostatischen Lager 22, 23, in der Beschreibung eingeführt.

In der Ausführung nach Fig. 2 wird über das Turbinengehäuse 12 mittels einer Versorgungsleitung 21 ein Lagermedium, wie beispielsweise Wasser (Sperrwasser), in das radiale hydrostatische Lager 22 zugeführt. Die Versorgungsleitung 21 wird hier aus Bohrungen im Turbinengehäuse 12 gebildet, die gegebenenfalls über weitere Leitungen indirekt oder direkt mit einer nicht dargestellten Versorgungsquelle, wie einer Pumpe und/ oder dem Oberwasser, eventuell über Hilfseinrichtungen wie Filter, Zyklone, Drosseln, Stromregelventilen, etc., verbunden ist. Mit einer Drossel oder einem Stromregelventil in der Versorgungsleitung 21 lässt sich sehr einfach die zugeführte Sperrwassermenge Q bzw. der Sperrwasserdruck $p_1$ einstellen.

Über den Umfang können natürlich eine Mehrzahl von Versorgungsleitungen 21, vorzugsweise symmetrisch, verteilt angeordnet sein, wobei eine für eine ausreichende und gleichmäßige Versorgung günstige Anordnung, z.B. drei Versorgungsleitungen 21, die jeweils um einen Winkel von 120° versetzt angeordnet sind, vorgesehen sein kann. Natürlich ist auch jede andere sinnvolle Anordnung denkbar.

Das radiale Lager 22 weist nun eine Lagerausnehmung in Form einer Nut 24 auf, in die die Versorgungsleitung 21 mündet und die, wie bekannt, (idealisiert) einen Bereich konstanten Druckes bildet. Diese Nut 24 des radialen hydrostatischen Lagers 22 ist über eine hydraulische Verbindung, hier eine Verbindungsbohrung 30, mit einer im Dichtring 20 angeordneten Nut 25 des axialen Lagers 23 verbunden. Die beiden Nuten 24, 25 sind ebenfalls Teil der zugehörigen hydrostatischen Lager 22, 23.

Zu beachten ist dabei insbesondere auch, dass die Lagerausnehmungen, hier Nuten 24, 25 auch gleichwertig in der axialen bzw. radialen Lagerfläche 26, 27 des Turbinengehäuses 12 oder des Laufrades 2, wie hier in der Nabe 11, angeordnet sein könnten. Ebenso möglich wäre es, Lagerausnehmungen sowohl im Dichtkörper 20 als auch im Turbinengehäuse 12 oder an einer beliebigen Stelle des Laufrades 2 im Bereich des zugehörigen hydraulischen Lagers vorzusehen. Gleichfalls ist es denkbar, dass ein hydraulisches Lager überhaupt keine Lagerausnehmung aufweist.

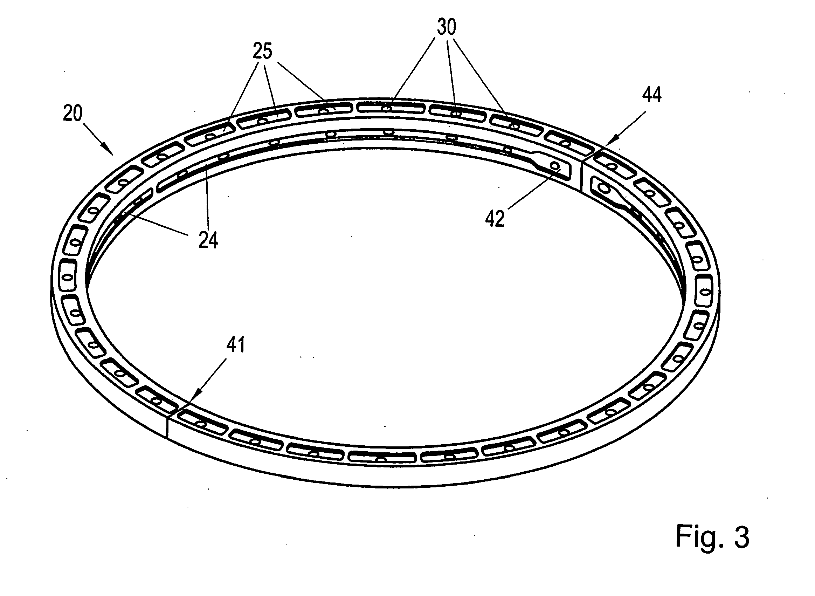

Die Lagerausnehmungen, hier die Nuten 24, 25, müssen über den Umfang natürlich nicht durchgehend verbunden sein, sondern es ist auch möglich, über den Umfang mehrere verteilte, die Nuten 24, 25 bildende Taschen anzuordnen, wie in Fig. 3 dargestellt und weiter unten im Detail beschrieben.

Somit werden beide hydrostatischen Lager 22, 23 von einer einzigen Versorgungsleitung 21 (bzw. von einer Anzahl über den Umfang verteilten Versorgungsleitungen) mit Lagermedium, dem Sperrwasser, versorgt. Das Sperrwasser wird dabei im vorliegenden Beispiel im radialen Lager 22 zugeführt und fließt über die Verbindungsbohrungen 30 in das axiale Lager 23. Die Versorgungsleitung 21 könnte aber selbstverständlich auch im axialen Lager 23 münden.

In der Verbindungsbohrung 30 ist nun eine Drosseleinrichtung 37 vorgesehen, die zwischen dem ersten hydrostatischen Lager 22 und dem zweiten hydrostatischen Lager 23 einen vorgebbaren Druckabfall bewirkt. Die Drosselwirkung einer Drosseleinrichtung 37 ist nach grundlegenden hydrodynamischen Gesetzen im Wesentlichen proportional zu einem Verlustbeiwert $\xi$, zur Dichte $\rho$ des strömenden Mediums und zum Quadrat der Strömungsgeschwindigkeit durch die Drosseleinrichtung 37. Die Drosseleinrichtung 37 kann auf unterschiedliche Weise ausgeführt sein, z.B. als Blende, als Lochplatte, als Prellblech, durch Gestaltung der Geometrie, wie eine entsprechende Wahl des Durchmessers oder Länge, der Verbindungsbohrung 30, oder es kann, wie im Beispiel nach Fig. 2, der bekannte Carnot'sche Stoßverlust bei einer plötzlichen Aufweitung des Querschnitts eines Strömungskanals ausgenutzt werden. Wie hinlänglich bekannt ist der Carnot'sche Druckverlust $p_v$ dabei im Wesentlichen proportional zum Quadrat der Strömungsgeschwindigkeit u durch den Strömungskanal und dem Quadrat des Verhältnis der Querschnittsflächen nach $A_2$ und vor $A_1$ der Aufweitung des Strömungskanals (Verlustbeiwert $\xi$) und kann mit der bekannten Dichte des Strömungsmediums p einfach berechnet und durch Wahl der Geometrie des Strömungskanals, wie z.B. der Verbindungsbohrung 30, wunschgemäß eingestellt werden:

$$ p_v = \zeta_{Carnot}\, \rho\, \frac{u^2}{2} = (1 - \frac{A_1}{A_2})^2\, \rho\, \frac{u^2}{2} $$

Im gegenständlichen Beispiel nach Fig. 2 ist im Bereich der Nut 24 im Eingangsbereich der Verbindungsbohrung 30 ein Bereich 31 mit großem Querschnitt vorgesehen, von dem die Verbindungsbohrung 30 ausgeht, wobei der Übergang von Eingangsbereich 31 zur Verbindungsbohrung 30 abgerundet sein kann, um mögliche Abnützung in diesem Bereich zu verringern und somit die gewählte Drosselwirkung über längere Laufzeiten des Dichtelementes 20 konstant zu halten. Das gegenüberliegende Ende 32 der Verbindungsbohrung 30 weist eine plötzliche Querschnittsaufweitung auf, an der der Carnot'sche Stoßverlust entsteht. Die Geschwindigkeit durch die Verbindungsbohrung 30 kann dabei, bei einem bestimmte Druck des Sperrwassers $p_1$ bzw. bei einem bestimmten Volumenstrom Q (der z.B. durch ein Stromregelventil in der Versorgungsleitung 21 regelbar sein kann), durch die Querschnittsfläche der Verbindungsbohrung 30 und/oder, bevorzugt, durch die Anzahl der über den Umfang verteilt angeordneten Verbindungsbohrungen 30 eingestellt werden.

Die Drosseleinrichtung 37 wird nun so gewählt bzw. so ausgelegt, dass sich zwischen erstem hydrostatischen Lager 22 und zweitem hydrostatischen Lager 23 ein Druckverlust, bezogen auf die am Dichtring 20 anliegende abzudichtende Druckdifferenz $p_o - p_u$, von zumindest 1 %, bevorzugt zumindest 5%, vorzugsweise zumindest 10%, einstellt. Der natürliche unvermeidbare Druckverlust hervorgerufen durch eine Strömung durch eine möglichst verlustfreie Bohrung, wie in bisherigen Dichtringen erwünscht, ist typischerweise um ca. zwei bis drei Zehnerpotenzen kleiner, ist also gegenüber der einstellbaren "inneren Drosselung" vernachlässigbar. Damit liegt der erfindungsgemäße erwünschte Druckverlust durch die Drosseleinrichtung 37 deutlich über der unvermeidbaren natürlichen Drosselwirkung (im Wesentlichen durch Rohrreibung, eventuellen Umlenkungen in der Verbindungsbohrung und zufolge einer Querschnittsaufweitung).

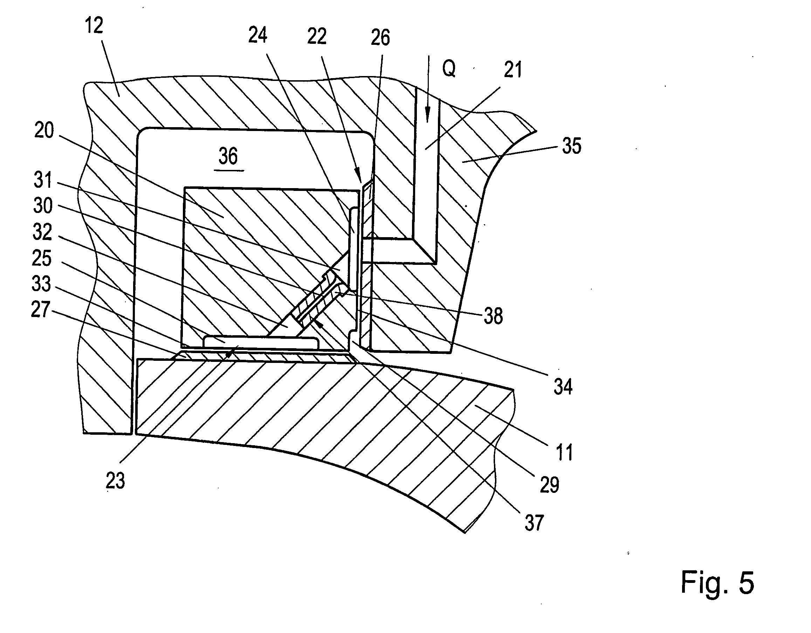

Der verengte Mittelteil der Verbindungsbohrung 30 kann auch durch einen rohrförmigen Einsatz 38, der in einer größere durchgehende Bohrung angeordnet wird, erreicht werden, wie in Fig. 5 gezeigt. Eine solche Anordnung ist insbesondere vorteilhaft, wenn der Dichtring 20 aus einem weichen Material gefertigt wird, z.B. aus Kunststoff, und der Rohreinsatz 38 dann aus einem harten, widerstandsfähigen Material gefertigt ist, um der Strömung mit hoher Strömungsgeschwindigkeit durch die engen Verbindungsbohrungen 30 langfristig zu widerstehen und damit die eingestellte innere Drosselung möglichst lange im Wesentlichen konstant zu halten.

Um die Funktion des Dichtringes 20 beschreiben zu können, sind schematisch in Fig. 2 zusätzlich noch die sich ergebenden Druckverteilungen im axialen und radialen Lager 23, 22 dargestellt. Das Lagermedium wird wie oben beschrieben über die Versorgungsleitung 21 mit einem Volumenstrom Q bzw. mit einem Druck $p_1$ in das radiale Lager 22 zugeführt. Der Volumenstrom Q des Lagermediums teilt sich im radialen Lager 22 in drei Ströme auf. Ein Strom fließt nach unten und mündet schließlich mit dem Druck $p_u$ in den axialen Rad-Seitenraum. Ein zweiter Strom fließt nach oben und mündet mit dem am Laufradeintritt herrschenden Druck $p_o$, der na-

türlich auch auf den Dichtring 20 wirkt, in den Lagerraum 36. Ein dritter, mit Abstand größter Strom fließt über die Verbindungsbohrung 30 in das axiale Lager 23. Die Aufteilung des Volumenstromes Q ergibt sich dabei natürlich durch den radialen Lagerspalt, der im Wesentlichen durch den im hydrostatischen Lager 22 herrschenden Druck $p_1$ und dem Druck $p_o$ am Laufradeintritt eingestellt wird.

Der Volumenstrom Q verursacht durch grundlegende bekannte strömungsmechanische Gesetze und abhängig von der Geometrie des radialen Lagers 22 im radialen Lager 22 die dargestellte Druckverteilung mit einem Maximaldruck $p_1$ in der Nut 24, in die die Versorgungsleitung 21 mündet. Diese Druckverteilung bewirkt, dass sich der Dichtring 20 in radialer Richtung abhebt. Radiales Abheben bedeutet in diesem Zusammenhang einerseits, dass sich der Dichtring 20 entsprechend zentriert, da der Druck über den gesamten inneren Umfang wirkt, und andererseits auch aufweitet. Dieser Aufweitung wirkt sowohl der Oberwasserdruck $p_o$, aber auch gemäß der Elastizitätstheorie die elastischen Rückstellkräfte des Dichtringes 20 entgegen. Der Maximaldruck $p_1$ muss also groß genug sein, um das Abheben des Dichtringes 20 auf den gewünschten Lagerspalt, z.B. typischerweise 50 - 100$\mu$m, bewirken zu können.

Im axialen hydrostatischen Lager 23 stellt sich ein Druck $p_2$ ein, der entsprechend dem einstellbaren Druckverlust zwischen den beiden Lagern 22, 23 kleiner als der Druck $p_1$ im radialen hydrostatischen Lager 22 ist. Über die Breite und Lage der Nut 25 kann wiederum eine Druckverteilung im axialen Lager 23 eingestellt werden, um den Dichtring 20 auch in axialer Richtung abzuheben.

Durch das Vorsehen einer Drosselung in der hydraulischen Verbindung, hier Verbindungsbohrung 30, zwischen radialen hydrostatischen Lager 22 und dem axialen hydrostatischen Lager 23 kann über den Druck in der Versorgungsleitung 21 bzw. dem zugeführten Volumenstrom Q auch der Druck $p_1$ im radialen Lager 22 beeinflusst werden, womit auch das radiale Lager 22 kontrolliert werden kann.

Da der Dichtring 20 in realen Anwendungen große Durchmesser aufweisen kann, bis zu einigen Metern, aber kleine Querschnitte und leichte Materialien erwünscht sind, ist der Dichtring 20 sehr verwindungsweich, also sehr empfindlich auf Momente, wie Kipp- oder Stülp momente. Daher ist es wichtig, den Dichtring 20 im Betrieb momentenfrei zu halten, da ansonsten ein sehr verformungssteifer Ring benötigt werden würde. Die Einstellung eines Momentengleichgewichts ist dabei durch die Wahl der Geometrie des Dichtringes 20, der hydrostatischen Lager 22, 23, sowie der Druckverteilungen und des Druckniveaus in den Lagern 22, 23 möglich. Dies kann, wie man sich einfach überlegen kann, dadurch erreicht werden, indem die Nuten 24, 25 so angeordnet werden, dass die Momentenbilanz zufolge der an den Dichtring 20 angreifenden Druckverteilungen um den Flächenquerschnitt des Dichtringquerschnittes ausgeglichen ist. Um dies zu erreichen, dient neben der gesamten Geometrie des Dichtringes 20, wie die Lage und Dimensionen der Nuten 24, 25, die Lagerspaltbreiten, die Außenabmessungen, etc, unter anderem auch die Ausnehmung 29.

Der Dichtring 20 schwimmt folglich praktisch reibungslos und stabil auf zwei hydraulischen Lagern und wird lediglich durch die auf den Dichtring 20 wirkenden hydraulischen Druckkräfte im Gleichgewicht gehalten. Im Gleichgewicht bedeutet dabei, dass der Dichtring 20 sowohl im Kräftegleichgewicht ist, als auch momentenfrei ist. Falls der Dichtring 20 nicht verdrehgesichert angeordnet wird, dreht er sich zusätzlich noch mit einer geringeren Drehzahl mit dem Laufrad 2 mit. Dadurch ergibt sich auch ein dynamischer Stabilitätsgewinn, da somit die Grenzumfangsgeschwindigkeit bzw. die Flattergrenze hinaufgesetzt wird. Darüber hinaus werden durch die geringeren Relativgeschwindigkeiten auch die Reibungsverluste geringer.

Mit einer erfindungsgemäßen Ausgestaltung eines Dichtelementes kann dieser folglich sowohl im Kräftegleichgewicht gehalten werden, als auch Momentenfreiheit am Dichtelement sichergestellt werden, womit ein für einen sicheren Betrieb des verwindungsweichen Dichtelementes gefährliches Verkippen oder Stülpen verhindert werden kann.

Im Falle eines verdrehgesicherten Dichtringes 20 kann die Verdrehsicherung unter der Voraussetzung, dass die axiale und radiale Beweglichkeit des Dichtringes 20 im Betrieb nicht oder nur vernachlässigbar behindert werden darf, nahezu beliebig ausgeführt werden. Z.B. könnte ein einfacher stationärer Anschlag am Turbinengehäuse 12 vorgesehen werden, an dem ein entsprechend geformter Anschlag am Dichtring 20 anliegt, um die Rotation des Dichtringes 20 zu verhindern. Da der Dichtring 20 wie oben beschrieben nahezu verlust- und reibungslos auf den in den hydraulischen Lagern entstehenden Druckpolstern schwimmt, entstehen nur sehr geringe Umfangskräfte auf den Dichtring 20, typischerweise im Bereich von einigen hundert N oder kleiner. Bei Lagerkräften in den hydraulischen Lagern 22, 23 von typischerweise einigen hundert kN und größer (also um einen Faktor von ~1000 größer) können diese Umfangskräfte (und daraus eventuell entstehende Reibungskräfte oder Haltekräfte an der Verdrehsicherung) aber vernachlässigt werden. Eine solche Verdrehsicherung würde folglich die axiale und radiale Beweglichkeit des Dichtringes nicht beeinflussen.

Durch die hohe Stabilität eines hydraulischen Lagers und der freien Beweglichkeit des Dichtringes 20, ist der Dichtring 20 in der Lage, Schwingungen des Laufrades 2 und/oder des Turbinengehäuses 12, sowie axiale Verschiebungen des Laufrades 2 auszugleichen, ohne die Dichtwirkung zu verlieren und ohne in Kontakt mit dem Laufrad 2 und/oder dem Turbinengehäuse 12 zu geraten. Der Dichtring 20 erleidet dadurch praktisch keine Abnützung, da er praktisch reibungslos auf Flüssigkeitsfilmen schwimmt, wodurch die Lebensdauer eines solchen Dichtringes 20 sehr hoch ist. Dadurch, dass der Dichtring 20 bevorzugt als sehr schlanker, leichter Ring gebaut werden kann, der kaum Massenkräfte aufweist, wird diese Wirkung noch verstärkt.

Der Dichtring 20 kann, im Verhältnis zu den Abmessungen des Laufrades 2, sehr klein gebaut werden, Kantenlängen von einigen Zentimeter, z.B. 5cm oder 8cm, bei Außendurchmessern von einigen Metern reichen vollkommen aus, und er kann aus einem beliebigen Material, wie Stahl, Lagerbronze, Kunststoff (z.B. PE), gefertigt sein. Weiters könnten die Lagerflächen 26, 34 und 27, 33 auch noch mit einer geeigneten Schicht, wie Teflon, Lagerbronze, etc., überzogen werden, um die Eigenschaften der Abdichtung noch weiter zu verbessern. Typischerweise wird der Dichtring 20 aus einem weicheren Material, wie z.B. Teflon, Bronze, etc., gefertigt wie das Gehäuse 12 oder das Laufrad 2 der hydraulischen Maschine. Dadurch wird er zum einen in der Regel leichter und zum anderen wird im Extremfall der Dichtring 20 und nicht das Laufrad 2 oder das Gehäuse 12 beschädigt oder gar zerstört.

Die Fig. 3 zeigt eine perspektivische Darstellung eines erfindungsgemäßen Dichtringes 20. An einer Stirnseite des Dichtringes 20 sind eine Vielzahl von Nuten 25 eingearbeitet, die Teil des axialen hydrostatischen Lagers 23 sind, wobei in jeder dieser Nuten 25 zumindest eine Verbindungsbohrung 30 mündet. An der Innenseite des Dichtringes 20 ist eine Reihe von Nuten 24 angeordnet, die Teil des radialen hydrostatischen Lagers 22 sind und wobei in jeder dieser Nuten 24 wiederum zumindest eine Verbindungsbohrung 30 mündet. Die Anzahl, Größe und Verteilung der Nuten 24, 25 sowie der Verbindungsbohrungen 30 kann dabei zur Erzielung eines Kräfte- und Momentengleichgewichts sowie zur Einstellung der gewünschten Druckverteilungen und der Lagerspalte in den zugeordneten hydrostatischen Lagern 22, 23 entsprechend gewählt werden.

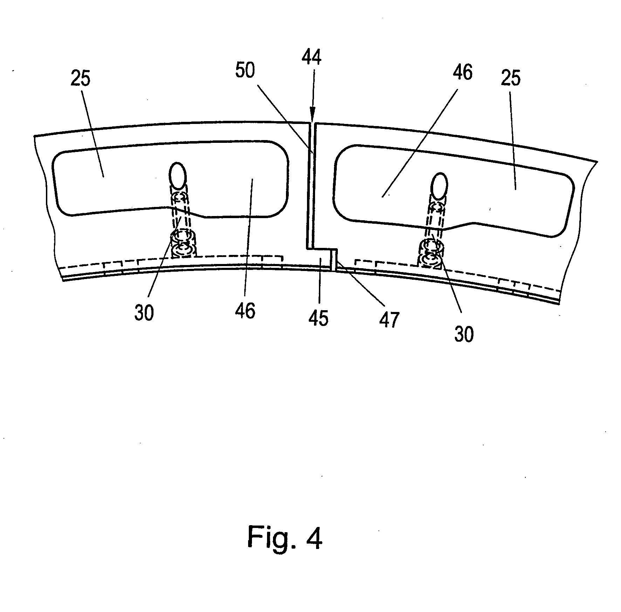

Der Dichtring 20 kann aber auch, wie in Fig. 3 und 4 gezeigt an einer oder mehreren Teilungsstellen 41, 44 in Umfangsrichtung geteilt ausgeführt sein, was unter Anderem die Fertigung oder den Transport des Dichtringes 20 erleichtert. Der Dichtring 20 ist im gezeigten Ausführungsbeispiel an zwei Teilungsstellen 41, 44 geteilt, wobei die beiden Hälften an einer ersten Teilungsstelle 41 über ein Verbindungsmittel, wie z.B. über Passstifte und einer Schraube, starr miteinander verbunden werden. An einer zweiten Teilungsstelle 44 bleibt der Dichtring 20 im zusammengesetzten Zustand geschlitzt, so dass in Umfangsrichtung ein Spalt 50 entsteht, wie in Fig. 4 gezeigt. Dieser Spalt 50 dient im Wesentlichen dazu, einen selbsttätigen Umfangslängenausgleich zu ermöglichen, der mögliche Abnutzungen des Dichtringes 20 an der Lagerfläche 34, z.B. durch feine Festkörper (wie z.B. Sand) im zugeführten Sperrwasser, die eine abrasive Wirkung haben, ausgleicht. Der selbsttätige Umfangslängenausgleich ergibt sich dabei daraus, dass die Lagerspalte (also die Dicke der Flüssigkeitsfilme in den Lagern) durch die Zufuhr einer bestimmten Fördermenge mit einem bestimmten Druck eingestellt werden. Durch die wirkenden Druckkräfte, die den Dichtring 20 gegen die beiden hydrostatischen Lager 22, 23 pressen, wird der geschlitzte Dichtring 20 in radialer Richtung zusammengedrückt (der Spalt 50 an der Teilungsstelle 44 wird somit kleiner), so dass sich der gewünschte Lagerspalt im hydrostatischen Lager wieder einstellt. Wenn der gesamte Spalt 50 "aufgebraucht" ist, die beiden Teile des Dichtringes also aneinander stoßen und ein weiterer Verschleiß also nicht mehr ausgeglichen werden kann, kann der Dichtring 20 getauscht werden.

Da sich ein solcher geschlitzter Dichtring 20 aber durch die auf ihn wirkenden hohen Drücke natürlich sehr stark verformen, insbesondere verbiegen und verwinden, würde, müssen entsprechende Maßnahmen ergriffen werden, um die Form des Dichtringes 20 auch im Betrieb zu erhalten. Außerdem könnte durch einen solchen Schlitz bzw. Spalt 50 Sperrwasser durchströmen, was die Funktion des Dichtringes 20 natürlich negativ beeinflussen würde. Dazu wird nun zum einen an der geschlitzten Teilungsstelle 44 an einer in Umfangsrichtung angeordneten Stirnfläche des Dichtringes eine Schulter 45 vorgesehen, an der eine Ausnehmung 47 an der gegenüberliegenden in Umfangsrichtung angeordneten Stirnfläche des Dichtringes 20 anliegt. Durch das Anpressen der Ausnehmung 47 an der Schulter 45 wird eine Dichtung realisiert, die verhindert, dass durch den Schlitz in radialer Richtung Sperrwasser durchströmt. Weiters kann sich dadurch der Dichtring 20 nicht in radialer Richtung verbiegen. Zum anderen kann an der einem hydrostatischen Lager abgewandten äußeren Stirnfläche des Dichtringes 20 eine Platte angeordnet werden, die sich über den Spalt 50 erstreckt. Damit würde wieder eine Dichtung geschaffen werden, die ein axiales Durchströmen von Sperrwasser durch den Schlitz verhindert. Weiters würde dadurch ein axiales Verbiegen und ein Verwinden des Dichtringes 20 verhindert. Die Platte könnte dabei mittels geeigneter Verbindungsmittel, wie z.B. mittels Passstiften und Schrauben, am Dichtring 20 befestigt werden, wobei diese Verbindungsmittel natürlich nur an einer Hälfte des Dichtringes 20 angeordnet werden dürfen, um die Beweglichkeit der beiden Dichtringhälften in Umfangsrichtung (was für den Umfangslängenausgleich ja wichtig ist) nicht zu behindern. Selbstverständlich können auch beliebig andere geeignete Anordnungen vorgesehen werden, um eine entsprechende Dichtung zu realisieren und eine Verformung des Dichtringes 20 zu verhindern. Z.B. könnte anstelle der Platte der Dichtring 20 natürlich, analog zur radialen Richtung wie oben beschrieben, auch in axialer Richtung an einer Hälfte eine Schulter aufweisen, die mit einer entsprechenden Ausnehmung an der anderen Hälfte zusammenwirkt.

Durch den Schlitz 44 kann sowohl die radiale, als auch die axiale Nut 24, 25 unterbrochen werden bzw. die symmetrische Anordnung der Nuten 24, 25 um den Umfang gestört werden. Damit könnten im Bereich dieser Teilungsstelle geringere Lagerkräfte entstehen, da in diesem Bereich die Flächen der Nuten 24, 25, an die der Lagerdruck $p_1$, p4 angreift, kleiner wäre, was zu einer ungleichmäßigen Druckbelastung des Dichtringes 20 führen würde. Dies könnte den verformungsweichen, elastischen, schlanken Dichtring 20 verformen, was in der Praxis bei den geringen Lagerspalten im hundert $\mu$m-Bereich zu Problemen, wie z.B. Mischreibungszustände, und im schlimmsten Fall zu einem Kontakt von Dichtring 20 und Laufrad 2 oder Turbinengehäuse 12 führen kann. Um dies zu verhindern können die an den Spalt 50 angrenzenden Nuten 24, 25 größer ausgeführt werden, oder es könnte in diesem Bereich eine andere Nutteilung in Umfangsrichtung und damit wieder eine unterschiedliche Nutfläche vorgesehen sein. Z.B. können die an den Spalt 50 angrenzenden Nuten 25 an der Stirnseite des Dichtringes 20 im dem Spalt 50 zugewandten Ende einen Bereich 46 mit einer größeren Nutfläche aufweisen. Ebenso können die an den Spalt 50 angrenzenden Nuten 24 an der Innenseite des Dichtringes 20 im dem Spalt 50 zugewandten Ende eine vergrößerte Nutfläche 42 aufweisen. Mit diesen vergrößerten Nutflächen 42, 46 kann ein entsprechender Ausgleich und ein Wiederherstellen bzw. Beibehalten des Kräfte- und Momentengleichgewichts durchgeführt werden.

Falls der Dichtring 20 mitdrehend ausgeführt wird, ist es vorteilhaft, insbesondere bei einer geschlitzten oder geteilten Ausführung, diesen zu wuchten.

Der Dichtring 20 kann selbstverständlich einen beliebigen Querschnitt, wie z.B. einen L-förmigen Querschnitt, aufweisen, wobei aus fertigungstechnischen Überlegungen eine quadratische oder rechteckige Form bevorzugt wird.

Bis jetzt wurde immer von ebenen Lagerflächen 26, 34 und 27, 33 ausgegangen. Es ist jedoch natürlich auch denkbar, die Lagerflächen 26, 34 und 27, 33 nicht eben, sondern z.B. konkav oder konvex geformt oder abgestuft, auszuführen, wobei sich am grundsätzlichen Prinzip der erfindungsgemäßen Abdichtung nichts ändert. Bei solchen nicht ebenen Lagerflächen 26, 34 und 27, 33 würden sich lediglich die Druckverteilungen etwas ändern, was für einen entsprechenden Fachmann aber klar ersichtlich ist. Ebenso ist es denkbar, dass die Lagerflächen 26, 34 und 27, 33 bezogen auf die Drehachse der Turbine 1 nicht achsparallel und achsnormal sind, sondern in einem Winkel dazu angeordnet werden.

Zur Verbesserung der Lagerwirkung und der Stabilität könnte eine oder mehrere der Lagerflächen 26, 34 und 27, 33 auch zusätzlich mit hinlänglich bekannten hydrodynamischen Schmiertaschen, zur Ausbildung eines zusätzlichen hydrodynamischen Lagers, versehen werden.

Eine erfindungsgemäße Abdichtung mit einem Dichtring 20 kann natürlich an jeder geeigneten Stelle vorgesehen werden und ist nicht auf die Ausführungsbeispiele nach Fig. 2 beschränkt. Z.B. könnte der Dichtring 20 auch zwischen Stirnseite des Laufrades 2 bzw. Nabe 11 und dem Turbinengehäuse 12 angeordnet sein. Gleichermaßen ist es denkbar, eine solche Abdichtung an einer geeigneten Stelle zwischen Ring 10 und dem Maschinengehäuse 12 vorzusehen.

Ebenfalls wäre es denkbar bei einem verdrehgesicherten Dichtring 20, wie an und für sich aus dem Stand der Technik bekannt, in der Lagerfläche 26, die bezüglich der zugeordneten Lagerfläche 34 am Dichtring 20 keiner Relativbewegung unterworfen ist, zu beiden Seiten, seitlich neben der Versorgungsleitung 21 oder seitlich einer Nut 24 jeweils einen Hilfsdichtkörper zwischen dem Dichtring 20 und der zugewandten Lagerfläche 26 am Gehäuse 12 vorzusehen. Mit einem solchen Hilfsdichtkörper würde verhindert werden, dass an diesem hydraulischen Lager Sperrwasser austritt, womit die Verluste durch die erfindungsgemäße Abdichtung noch weiter verringert werden können. Vor allem könnte damit aber verhindert bzw. erheblich reduziert werden, dass das hydraulische Lager durch austretendes verschmutztes Sperrwasser übermäßig verschleißt. Die Hilfsdichtkörper wären dabei natürlich so einzusetzen, dass sie bei noch ausreichender Dichtwirkung möglichst geringer Kraftwirkung entfalten, da der Dichtring 20 ja schwimmend gelagert bleiben soll. Da der Dichtring 20 stabil auf den Druckpolstern schwimmend gelagert ist, lässt sich dies über die einzustelle Höhe des Dichtspaltes einfach bewerkstelligen. Durch die mögliche geringe Kraft auf die Hilfsdichtkörper, typischerweise um einen Faktor 1000 oder mehr kleiner als die hydraulischen Lagerkräfte, kann man wiederum von einer schwimmenden Lagerung sprechen und man kann sicherstellen, dass die axiale und radiale Beweglichkeit des Dichtringes 20 nur unwesentlich und vernachlässigbar beeinflusst wird.

Die oben beschriebene Abdichtung stellt eine weitgehend dichte Abdichtung dar. Die gesamte zufließende Wassermenge fließt durch das Laufrad und kann in Rotationsenergie umgewandelt werden. Die Spaltwasserverluste reduzieren sich dabei ausschließlich auf das austretende Lagermedium, sind also aufgrund der geringen Spalthöhen in den hydraulischen Lagern, z.B. typischerweise im 10-60 $\mu$m-Bereich bei hydrostatischen Lagern 22, 23, sehr gering und können zum Teil durch Einleiten des Spaltwassers in den Hauptwasserstrom F wieder rückgewonnen werden.

In allen Phasen des Betriebes sollte tunlichst vermieden werden, dass der Dichtring 20 in Kontakt mit dem Laufrad 2 oder dem Gehäuse 12 kommt oder sich Mischreibungszustände in den hydraulischen Lagern 22, 23 einstellen, da dann der Dichtring 20 sehr leicht beschädigt oder sogar zerstört werden kann. Beim Starten der Turbine 1 sollte der Dichtring 20 also bereits abgehoben sein, d.h. die erwünschten Lagerspalte sollten bereits erreicht sein. Dies kann einfach erreicht werden, indem man zuerst die Versorgung der hydraulischen Lager 22, 23 einschaltet und erst danach die Turbine 1 eingeschalten wird. Im Falle eines Ausfalls der Versorgung der hydrostatischen Lager 22, 23 könnte man z.B. eine Notversorgung, wie ein Windkessel, vorsehen, um eine Beschädigung des Dichtringes 20 der hydraulischen Maschine, was aufwendige Wartungsarbeiten nach sich ziehen würde, zu vermeiden.

Bei der erstmaligen Inbetriebnahme des Dichtringes 20 kann es jedoch erwünscht sein, einen kontrollierten Mischreibungszustand in den hydraulischen Lagern 22, 23 einzustellen, sodass sich in den Lagerflächen 26, 34 und 27, 33 ein Lagerbild einschleifen kann, wodurch gewisse Fertigungsungenauigkeiten ausgeglichen werden können. Da sich die Lagerspalte jedoch im hundert μm-Bereich bzw. darunter befinden, ist dabei natürlich entsprechende Vorsicht angebracht.

In der Beschreibung oben wird der Einfachheit halber als Lagermedium Wasser beschrieben. Das Lagermedium kann, vor allem bei Pumpen, natürlich auch ein beliebig anderes geeignetes Medium, wie z.B. Öl, sein.

**Patentansprüche**

1. Anordnung zur Abdichtung zwischen zwei relativ zueinander bewegten Teilen einer hydraulischen Strömungsmaschine, vorzugsweise zwischen einem Gehäuse (12) und einem Laufrad (2) einer hydraulischen Strömungsmaschine (1), mit einem Dichtelement (20), das hinsichtlich der beiden Teile auf einem ersten und einem zweiten hydraulischen Lager (22, 23) schwimmend gelagert angeordnet ist, wobei das erste und das zweite hydraulische Lager (22, 23) aus zumindest zwei zugeordneten Lagerflächen (26, 34 und 27, 33) bestehen und das Dichtelement (20) durch die auf seine Lagerflächen (33, 34) wirkenden hydraulischen Druckkräfte in zwei unterschiedlichen Richtungen gelagert ist und wobei im Dichtelement (20) eine hydraulische Verbindung (30), vorzugsweise eine Verbindungsbohrung, vorgesehen ist, die das erste hydraulische Lager (22) mit dem zweiten hydraulischen Lager (23) hydraulisch verbindet und mit einer Versorgungsleitung (21), die in das erste hydraulische Lager (22) mündet und Lagermedium in das erste hydraulische Lager (22) zuführt, das über die hydraulische Verbindung (30) zum zweiten hydraulischen Lager (23) fließt, **dadurch gekennzeichnet, dass** zur Einstellung eines Druckverlustes zwischen dem ersten hydraulischen Lager (22) und dem zweiten hydraulischen Lager (23) in der hydraulischen Verbindung (30) eine Drosseleinrichtung (37) vorgesehen ist, wobei durch die Drosseleinrichtung (37) ein Druckverlust, bezogen auf die am Dichtelement (20) anliegende abzudichtende Druckdifferenz ($p_o$-$p_u$), von zumindest 1%, bevorzugt zumindest 5%, vorzugsweise zumindest 10%, zwischen erstem hydraulischen Lager (22) und zweitem hydraulischen Lager (23) vorgebbar ist.

2. Anordnung nach Anspruch 1, **dadurch gekennzeichnet, dass** als Drosseleinrichtung (37) die hydraulische Verbindung (30) selbst vorgesehen ist.

3. Anordnung nach Anspruch 1, **dadurch gekennzeichnet, dass** als Drosseleinrichtung (37) ein Rohreinsatz (38) in der hydraulischen Verbindung (30) vorgesehen ist.

4. Anordnung nach einem der Ansprüche 1 bis 3, **dadurch gekennzeichnet, dass** die Drosseleinrichtung (37) als Blende, Lochplatte oder Prellblech ausgebildet ist.

5. Anordnung nach einem der Ansprüche 1 bis 4, **dadurch gekennzeichnet, dass** die Drosseleinrichtung (37) als plötzliche Aufweitung des Querschnittes der hydraulischen Verbindung (30) ausgebildet ist.

6. Anordnung nach einem der Ansprüche 1 bis 5, **dadurch gekennzeichnet, dass** als Dichtelement (20) ein Dichtring vorgesehen ist.

7. Anordnung nach Anspruch 6, **dadurch gekennzeichnet, dass** der Dichtring (20) in zumindest zwei Teile geteilt ausgeführt ist.

8. Anordnung nach Anspruch 7, **dadurch gekennzeichnet, dass** der Dichtring (20) an einer Anzahl der Teilungsstellen (44) geschlitzt ausgeführt ist und an den restlichen Teilungsstellen (41) die Teile des Dichtringes (20) starr miteinander verbunden sind.

9. Anordnung nach Anspruch 8, **dadurch gekennzeichnet, dass** an zumindest einer geschlitzten Teilungsstelle (44) ein Spalt (50) zur Ermöglichung eines Umfangslängenausgleiches vorgesehen ist.

10. Anordnung nach Anspruch 8 oder 9, **dadurch gekennzeichnet, dass** an der geschlitzten Teilungsstelle (44) ein Mittel zum Verhindern des Durchströmens von Sperrwasser durch die Teilungsstelle (44) vorgesehen ist, das die Beweglichkeit des Dichtringes (20) in Umfangsrichtung nicht behindert.

11. Anordnung nach einem der Ansprüche 8 bis 10, **dadurch gekennzeichnet, dass** an der geschlitzten Teilungsstelle (44) ein Kittel zum Verhindern einer Verformung des Dichtringes (20) vorgesehen ist, das die Beweglichkeit des Dichtringes (20) in Umfangsrichtung nicht behindert.

12. Anordnung nach einem der Ansprüche 7 bis 11, **dadurch gekennzeichnet, dass** der Dichtring (20) Lagerausnehmungen (24, 25) hat und zumindest eine an eine Teilungsstelle (41, 44) angrenzende Lagerausnehmung (24, 25) im Bereich der Teilungsstelle (41, 44) mit einer zu anderen Lagerausnehmungen oder der restlichen Lagerausnehmung unterschiedlichen Lagerausnehmungsfläche ausgeführt ist.

**13.** Anordnung nach einem der Ansprüche 1 bis 12, **dadurch gekennzeichnet, dass** das Dichtelement (20) mittels einer Verdrehsicherung gegenüber einem der beiden Teile der hydraulischen Strömungsmaschine (1) verdrehgesichert angeordnet ist.

**14.** Anordnung nach Anspruch 13, **dadurch gekennzeichnet, dass** die Verdrehsicherung auf das Dichtelement (20) im Wesentlichen nur eine Umfangskraft ausübt.

**15.** Anordnung nach einem der Ansprüche 1 bis 14, **dadurch gekennzeichnet, dass** zumindest ein hydraulisches Lager (22, 23) ein hydrostatisches Lager ist.

**Claims**

**1.** Arrangement for sealing between two parts of a hydraulic turbomachine that can move relative to each other, preferably between a casing (12) and a rotor (2) of a hydraulic turbomachine (1), with a sealing element (20), which, with respect to the two parts, is mounted floating on a first and a second hydraulic bearing (22, 23), whereby the first and the second hydraulic bearing (22, 23) consist of at least two associated bearing surfaces (26, 34 and 27, 33) and the sealing element (20) is mounted in two different directions due to the hydraulic forces acting upon its bearing surfaces (33, 34), and whereby in the sealing element (20), a hydraulic connection (30), preferably a connection bore, is provided, which hydraulically connects the first hydraulic bearing (22) with the second hydraulic bearing (23) and with a supply conduit (21), that flows into the first hydraulic bearing (22) and supplies bearing fluid to the first hydraulic bearing (22) that flows via the hydraulic connection (30) to the second hydraulic bearing (23), **characterized by, that** for the adjustment of a pressure loss between the first hydraulic bearing (22) and the second hydraulic bearing (23), a restriction device (37) is provided in the hydraulic connection (30), whereas a pressure loss, relative to the pressure difference ($p_o$-$p_u$) that is to be sealed off at the sealing element, of at least 1%, preferably at least 5%, preferably at least 10%, can be set between the first hydraulic bearing (22) and the second hydraulic bearing (23) with the restriction device (37).

**2.** Arrangement according to Claim 1, **characterized by, that** the hydraulic connection (30) itself is provided as the restricting device (37).

**3.** Arrangement according to Claim 1, **characterized by, that** a pipe insert (38) in the hydraulic connection (30) is provided as restricting device.

**4.** Arrangement according to one of claims 1 to 3, **characterized by, that** the restricting device (37) is designed as faceplate, perforated plate or impingement plate.

**5.** Arrangement according to one of claims 1 to 4, **characterized by, that** the restricting device (37) is designed as sudden expansion of the cross section of the hydraulic connection (30).

**6.** Arrangement according to one of claims 1 to 5, **characterized by, that** as sealing element (20), a sealing ring is provided as sealing element (20).

**7.** Arrangement according to Claim 6, **characterized by, that** the sealing ring (20) is designed separated into at least two parts.

**8.** Arrangement according to Claim 7, **characterized by, that** the sealing ring (20) is designed slit at a number of separation positions (44), and at the remaining separation positions (41), the parts of the sealing ring (20) are connected rigidly with each other.

**9.** Arrangement according to Claim 8, **characterized by, that** on at least one slit separation position (44), a gap (50) is provided to make a peripheral length compensation possible.

**10.** Arrangement according to claim 8 or 9, **characterized by, that** at the slit separation position (44) a means to prevent sealing water from flowing through the separation position (44) is provided, which does not impair the maneuverability of the sealing ring (20) in the circumferential direction.

**11.** Arrangement according to one of claims 8 to 10, **characterized by, that** at the slit separation position (44), a means is provided to prevent a deformation of the sealing ring (20), which does not impair the mobilty of the sealing ring (20) in the circumferential direction.

**12.** Arrangement according to one of claims 7 to 11, **characterized by, that** the sealing ring (20) has bearing recesses (24, 25) and at least one bearing recess (24, 25) adjacent to a separation position (41, 44) is designed in the section of the separation position (41, 44) with a bearing recess surface that is different with respect to the other bearing recesses or the remaining bearing recess.

**13.** Arrangement according to one of claims 1 to 12, **characterized by, that** the sealing element (20) is mounted twist-safe with respect to the two parts of the hydraulic turbomachine (1) by means of a locking device.

**14.** Arrangement according to Claim 13, **characterized by, that** the locking device only essentially exerts a circumferential force on the sealing element (20).

**15.** Arrangement according to one of claims 1 to 14, **characterized by, that** at least one hydraulic bearing (22, 23) is a hydrostatic bearing.

**Revendications**

**1.** Ensemble destiné à assurer l'étanchéité entre deux parties mobiles l'une par rapport à l'autre d'une turbomachine hydraulique, de préférence entre un carter (12) et un rotor (2) d'une turbomachine hydraulique (1), avec un élément d'étanchéité (20), qui, par rapport aux deux parties, est monté flottant sur un premier et un deuxième palier hydraulique (22, 23), le premier et le deuxième palier hydraulique (22, 23) étant constitués par au moins deux surfaces d'appui (26, 34 et 27, 33) associées et l'élément d'étanchéité (20) étant monté dans deux directions différentes par les forces de pression hydraulique agissant sur ses surfaces d'appui (33, 34), et une liaison hydraulique (30), de préférence un alésage de liaison, étant prévue dans l'élément d'étanchéité (20), laquelle met en communication hydraulique le premier palier hydraulique (22) et le deuxième palier hydraulique (23), et avec une conduite d'alimentation (21), qui débouche dans le premier palier hydraulique (22) et alimente le premier palier hydraulique (22) en milieu de palier, qui s'écoule, par la liaison hydraulique (30), vers le deuxième palier hydraulique (23), **caractérisé par le fait que**, pour régler une perte de pression entre le premier palier hydraulique (22) et le deuxième palier hydraulique (23), un dispositif d'étranglement (37) est prévu dans la liaison hydraulique (30), une perte de pression, relativement à la différence de pression à étancher ($p_0$-$p_u$) qui règne au niveau de l'élément d'étanchéité (20), d'au moins 1%, de préférence d'au moins 5%, de façon plus préférée d'au moins 10%, entre le premier palier hydraulique (22) et le deuxième palier hydraulique (23).

**2.** Ensemble selon la revendication 1, **caractérisé par le fait que** la liaison hydraulique (30) tient elle-même lieu de dispositif d'étranglement (37).

**3.** Ensemble selon la revendication 1, **caractérisé par le fait qu'**un insert tubulaire (38) dans la liaison hydraulique (30) tient lieu de dispositif d'étranglement (37).

**4.** Ensemble selon l'une des revendications 1 à 3, **caractérisé par le fait que** le dispositif d'étranglement (37) est réalisé sous la forme d'un diaphragme, d'une plaque perforée ou d'une chicane.

**5.** Ensemble selon l'une des revendications 1 à 4, **caractérisé par le fait que** le dispositif d'étranglement (37) est réalisé sous la forme d'un élargissement brusque de la section transversale de la liaison hydraulique (30).

**6.** Ensemble selon l'une des revendications 1 à 5, **caractérisé par le fait qu'**une bague d'étanchéité tient lieu d'élément d'étanchéité (20).

**7.** Ensemble selon la revendication 6, **caractérisé par le fait que** la bague d'étanchéité (20) est réalisée séparée en au moins deux parties.

**8.** Ensemble selon la revendication 7, **caractérisé par le fait que** la bague d'étanchéité (20) est réalisée entaillée au niveau d'un nombre de sites de séparation (44) et les parties de la bague d'étanchéité (20) sont reliées rigidement entre elles au niveau des sites de séparation restants (41).

**9.** Ensemble selon la revendication 8, **caractérisé par le fait qu'**il est prévu, au niveau du ou des sites de séparation entaillés (44), une fente (50) permettant une compensation de la longueur de la circonférence.

**10.** Ensemble selon l'une des revendications 8 ou 9, **caractérisé par le fait qu'** il est prévu, au niveau des sites de séparation entaillés (44), un moyen pour empêcher l'écoulement d'eau de barrage à travers les sites de séparation (44), qui ne gêne pas la mobilité de la bague d'étanchéité (20) dans le sens de la circonférence.

**11.** Ensemble selon l'une des revendications 8 à 10, **caractérisé par le fait qu'**il prévu, au niveau des sites de séparation entaillés (44), un moyen pour empêcher une déformation de la bague d'étanchéité (20), qui ne gêne pas la mobilité de la bague d'étanchéité (20) dans le sens de la circonférence.

**12.** Ensemble selon l'une des revendications 7 à 11, **caractérisé par le fait que** la bague d'étanchéité (20) a des évidements de palier (24, 25), et au moins un évidement de palier (24, 25) voisin d'un site de séparation (41, 44) est réalisé dans la zone du site de séparation (41, 44) avec une surface d'évidement de palier différente des autres évidements de palier ou de l'évidement de palier restant.

**13.** Ensemble selon l'une des revendication 1 à 12, **caractérisé par le fait que** l'élément d'étanchéité (20) est disposé bloqué en rotation, au moyen d'un dispositif de blocage de rotation, par rapport à l'une des deux parties de la turbomachine hydraulique (1).

**14.** Ensemble selon la revendication 13, **caractérisé**

**par le fait que** le dispositif de blocage de rotation n'exerce sensiblement qu'une force périphérique sur l'élément d'étanchéité (20).

15. Ensemble selon l'une des revendications 1 à 14, **caractérisé par le fait qu'**au moins un palier hydraulique (22, 23) est un palier hydrostatique.

Fig. 1

Fig. 2

Fig. 3

EP 2 084 395 B1

Fig. 4

EP 2 084 395 B1

Fig. 5

18

**EP 2 084 395 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1098088 A
- US 5052694 A
- AT 298365 B
- US 4118040 A
- GB 839880 A
- WO 0223038 A1
- WO 2004018870 A1